# EUROPEAN PATENT APPLICATION

(11) **EP 3 646 930 A1**
(43) Date of publication of application: **06.05.2020**
(21) Application number: 19203447.8
(22) Date of filing: 16.10.2019
(51) Int. Cl.: B01D 39/16

(54) **FILTRATION MEDIA PACKS FORMED USING A DISSOLVABLE MATERIAL**

(30) Priority: 02.11.2018 US 201816179285
(71) Applicant: Caterpillar, Inc., Deerfield, IL 60015 (US)
(72) Inventor: Rodriguez, Javier, Peoria, IL 61629-9510 (US); MOORHOUSE, Darrell, Texas 76021 (US); Spengler, Philip, Washington, IL 61571 (US)
(74) Representative: Boult Wade Tennant LLP

(57) **Abstract**

A filter medium (700) includes a matrix (702) including a first portion (704) comprising a first material (706) defining a plurality of spaces (708) lacking the first material (706), and a second portion (710) comprising a second material (712) disposed in the plurality of spaces (708) at least partially filling the spaces (708).

## Description

### Technical Field

The present disclosure relates to filters and breathers used to remove contaminants various fluids such as hydraulic fluid, air filtration, oil, and fuel, etc. used to power the mechanisms and engines of earth moving, construction and mining equipment and the like (e.g. automotive, agriculture, HVAC (heating, ventilation and air conditioning), locomotive, marine, exhaust treatment or any other industry where filters and breathers are useful). Specifically, the present disclosure relates to filters that are manufactured using 3D printing technology, allowing more complex geometry to be used in the filter.

### Background

Earth moving, construction and mining equipment and the like often use filters and/or breathers used to remove contaminants various fluids such as hydraulic fluid, oil, and fuel, etc. used to power the mechanisms and engines of the equipment. Over time, contaminants collect in the fluid that may be detrimental to the components of the various mechanisms (e.g. hydraulic cylinders) and the engines, necessitating repair. The goal of the filters and/or breathers to remove the contaminants in the various fluids to prolong the useful life of these components. Any industry using filters and/or breathers may also need to remove contaminants from hydraulic fluid, air, oil, and fuel, etc. Examples of these other industries include but are not limited to, automotive, agriculture, HVAC, locomotive, marine, exhaust treatment, etc.

The features and geometry employed by such filters is limited by the manufacturing techniques available to make the filters and their associated filter media. The technologies typically used include folding porous fabric or other materials that remove the contaminants. Typical additive manufacture is structured around creating parts which are solid as opposed to being porous. As a result, generating a filtration media of a useable grade that can be integrated into printed parts or used in a media pack is not within the standard capability of current additive technologies such as FDM (fused deposition modeling), FFF (fused filament fabrication), SLA (stereolithography), etc.

U.S. Pat. Application Publ. No. 20180200650A1 to Salsburey et al. provides a method of manufacturing a filter, wherein the filter comprises a filter body formed of a porous filtration material and a plastic support structure. The method includes performing a first additive manufacturing step to form an initial portion of the support structure; positioning filtration material above or on the initial portion; performing a second additive manufacturing step to form a secondary portion of the support structure such that the filtration material is between the initial and secondary portions. Additionally, the filter body can be enclosed by positioning a first portion of the filtration material to overlay a second portion of the filtration material; and connecting the first portion of the filtration material to the second portion of the filtration material to define a pocket within the filter body, the support structure configured to maintain spacing between the first and second portions of the filtration material (see the Abstract of *Salsburey et al.*)*.*

However, further developments on how to use different materials supplied by different nozzle heads of a 3D printing device is still warranted.

### Summary

A filter medium according to an embodiment of the present disclosure may comprise a matrix including a first portion comprising a first material defining a plurality of spaces lacking the first material; and a second portion comprising a second material disposed in the plurality of spaces at least partially filling the spaces. The second material may have a water solubility equal to or less than 30 mass parts of water necessary to dissolve 1 mass part of the second material and the first material may have a water solubility greater than 30 mass parts of water necessary to dissolve 1 mass part of the first material.

A filter according to an embodiment of the present disclosure may comprise a body including an outer wall defining a hollow interior; an inlet in fluid communication with the hollow interior, an outlet in fluid communication with the hollow interior; and a first filter medium disposed in the hollow interior including a first portion comprising a first material defining a plurality of spaces lacking the first material; and a second portion comprising a second material disposed in the plurality of spaces at least partially filling the spaces. The second material may have a water solubility equal to or less than 30 mass parts of water necessary to dissolve 1 mass part of the second material and the first material may have a water solubility greater than 30 mass parts of water necessary to dissolve 1 mass part of the first material.

A method for manufacturing a filter or filter medium according to an embodiment of the present disclosure may comprise providing a computer-readable three-dimensional model of the filter or the filter medium, the three-dimensional model being configured to be converted into a plurality of slices that each define a cross-sectional layer of the filter or filter medium; successively forming each layer of the filter or the filter medium by additive manufacturing; forming a first portion comprising a first material defining a plurality of spaces lacking the first material; and forming a second portion comprising a second material that is different than the first material that is disposed in the plurality of spaces.

### Brief Description of the Drawings

The accompanying drawings, which are incorporated in and constitute a part of this specification, illustrate several embodiments of the disclosure and together with the description, serve to explain the principles of the disclosure. In the drawings:
FIG. 1 is a perspective view of a filter medium manufactured using 3D printing or other additive manufacturing technology according to a first embodiment of the present disclosure. Permanent structure formed by a first material is shown by a first shading while temporary support structure formed by another material that is later removed is shown by a second shading.
FIG. 2 is a perspective view of the filter medium of FIG. 1 except that the material forming the support structure has been removed, creating pores or other "negative spaces".
FIG. 3 is a front oriented perspective view of a filter that employs the filter medium of FIG. 2.
FIG. 4 is a rear oriented perspective view of the filter of FIG. 3.
FIG. 5 is a top oriented perspective view of the filter of FIG. 3.
FIG. 6 is a perspective view of a filter according to another embodiment of the present disclosure that employs a filter medium according to another embodiment of the present disclosure similar to that of FIG. 2 except that the filter medium has an annular configuration.
FIG. 7 is a perspective sectional view of the filter of FIG. 6.
FIG. 8 shows the filter of FIG. 7 in a dry state as it is being built using an additive manufacturing process, more clearly showing the porosity of the filter medium.
FIG. 9 shows a front sectional view of the filter assembly of FIG. 8.
FIG. 10 is a top sectional view of the filter of FIG. 8.
FIG. 11 is a bottom sectional view of the filter of FIG. 8

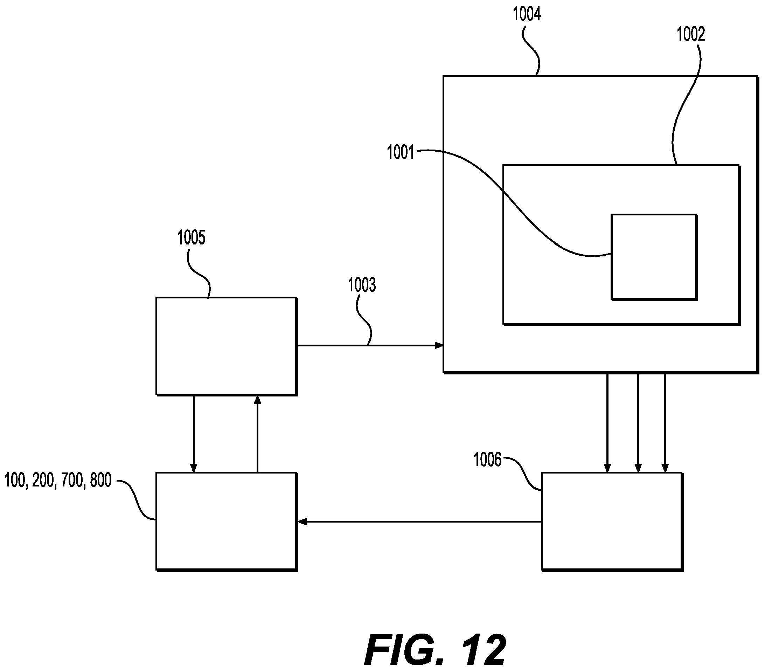

FIG. 12 is a schematic depicting a method and representing a system for generating a three-dimensional model of the filter and/or filter medium according to any embodiment of the present disclosure.
FIG. 13 is a flowchart illustrating a method of creating a filter and/or a filter medium according to an embodiment of the present disclosure.
FIG. 14 depicts an apparatus used to implement the methods of FIGS. 12 and 13.

### Detailed Description

Reference will now be made in detail to embodiments of the disclosure, examples of which are illustrated in the accompanying drawings. Wherever possible, the same reference numbers will be used throughout the drawings to refer to the same or like parts. In some cases, a reference number will be indicated in this specification and the drawings will show the reference number followed by a letter for example, 100a, 100b or by a prime for example, 100', 100" etc. It is to be understood that the use of letters or primes immediately after a reference number indicates that these features are similarly shaped and have similar function as is often the case when geometry is mirrored about a plane of symmetry. For ease of explanation in this specification, letters and primes will often not be included herein but may be shown in the drawings to indicate duplications of features, having similar or identical function or geometry, discussed within this written specification.

Various embodiments of a filter and/or filter medium will be discussed herein that utilize existing additive manufacturing technologies to implement a method to produce a repeatable process that generates porous filtration media of a useable efficiency grade. Examples of the process include FFF, FDM, SLA, etc., 3D printing hardware, and specific control of the movement patterns of the printing head so that as the material is added to the part, small gaps are created to build a porous structure in various ways.

For example, a 3D Printer that employs dual nozzle heads can manufacture parts with more than one material. One head may be used for printing the structure of the desired part and the other for adding support material (or support structure) on geometry or features consisting of dramatic overhangs or that require additional support. When the print is finished, this additional support material can be broken off to reveal the final printed piece.

In various embodiments of the present disclosure, plastic filaments may be used for support material that can dissolve in water. So, instead of manually having to break off the support material from all the supported sections, a part can be placed into a bath of water to dissolve the support material and reveal the desired print piece. The concept of producing fluid filtration media and fluid filter components through additive manufacturing techniques affords a unique prospect for dissolvable and soluble plastic filaments. Other materials and methods of chemical removal of the support structure is possible.

More particularly, the support filament may occupy the "negative space" in the filtration media and support the internal structure during the print of the desired printed piece. The internal porous structure will then reveal itself upon being submerged in a bath of water. As a result, a porous structure retaining plastic from one of print heads for structural purposes and losing the filament that was meant to offer support and create the negative space. This may provide more control to the porosity and internal structure of the filtration media and allows for more complicated internal features within the filtration media, like fluid passage channels or any other filtration geometry desired to be incorporated as compared to known techniques.

Through the incorporation of different sized nozzles for the support material and the structural material, the control for the size of the pore and negative space in the filtration media may be improved. The structural filament for the filtration media can be controlled to print at its own size, and the same for the support material. Thus, offering flexibility with the negative and positive space of the filtration media pack.

Filters and/or filter media discussed herein may be used to remove contaminants in any type of fluid, including hydraulic fluid, oil, fuel, etc. and may be used in any industry including earth moving, construction and mining, etc. As used herein, the term "filter" is to be interpreted to include "breathers" or any device used to remove contaminants from fluids as described anywhere herein. Also, any suitable industry as previously described herein that uses filters and/or breathers may use any of the embodiments discussed herein.

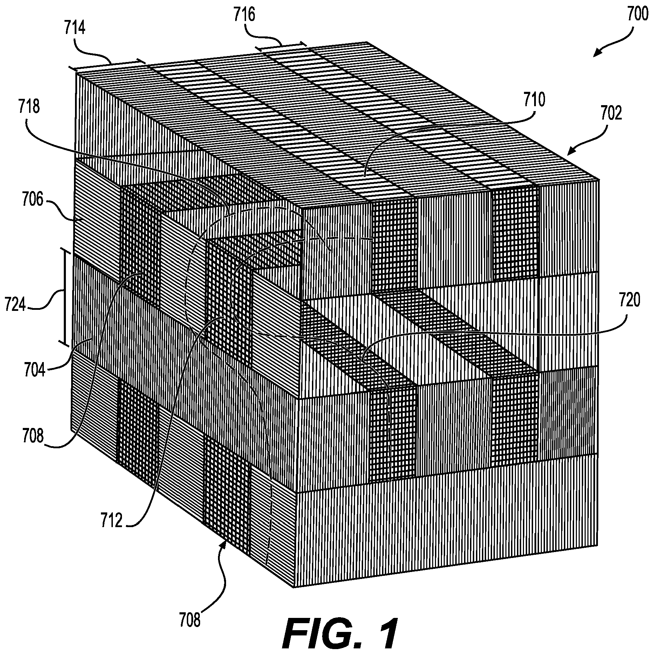

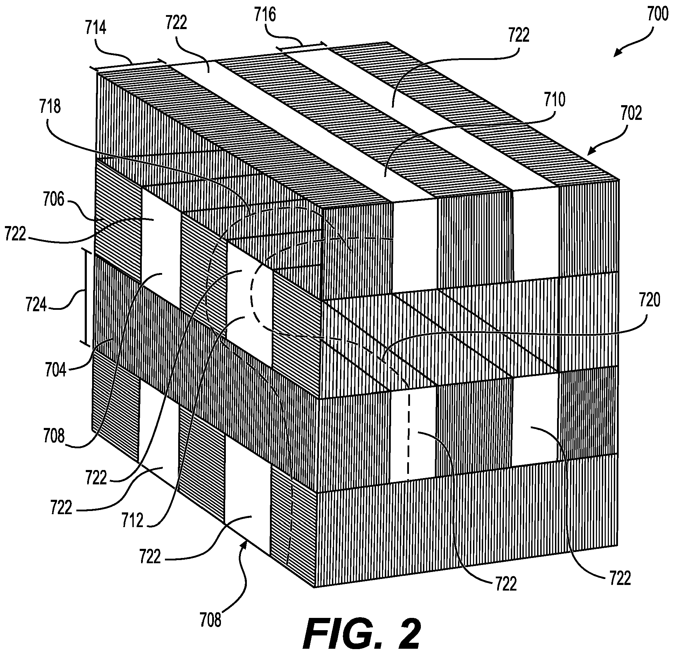

Looking at FIGS. 1 and 2, a filter medium 700 according to an embodiment of the present disclosure will now be discussed. The filter medium 700 may comprise a matrix 702 including a first portion 704 comprising a first material 706 defining a plurality of spaces 708 lacking the first material 706, and a second portion 710 comprising a second material 712 disposed in the plurality of spaces 708 at least partially filling the spaces 708.

The first material 706 may comprise a permanent structural material and the second material 712 may include a dissolvable support material. More particularly, the dissolvable support material may be water soluble. Hence, the filter medium 700 may be treated with water to remove the dissolvable support material or may be part of a filter that is connected to an apparatus to run water through the filter medium 700 to remove the dissolvable support material. For example, both the first material 706 and the second material 712 may be plastic materials. Various plastics may be used for the structural material including, but not limited to PLA, co-polyesters, ABS, PE, Nylon, PU, etc. Other plastics may be used for the support material including PVA, etc. As can be seen, the first material may have a different chemical structure than the second material but not necessarily so. The first portion 704 may comprise more than one material and the second portion 710 may also comprise more than one material.

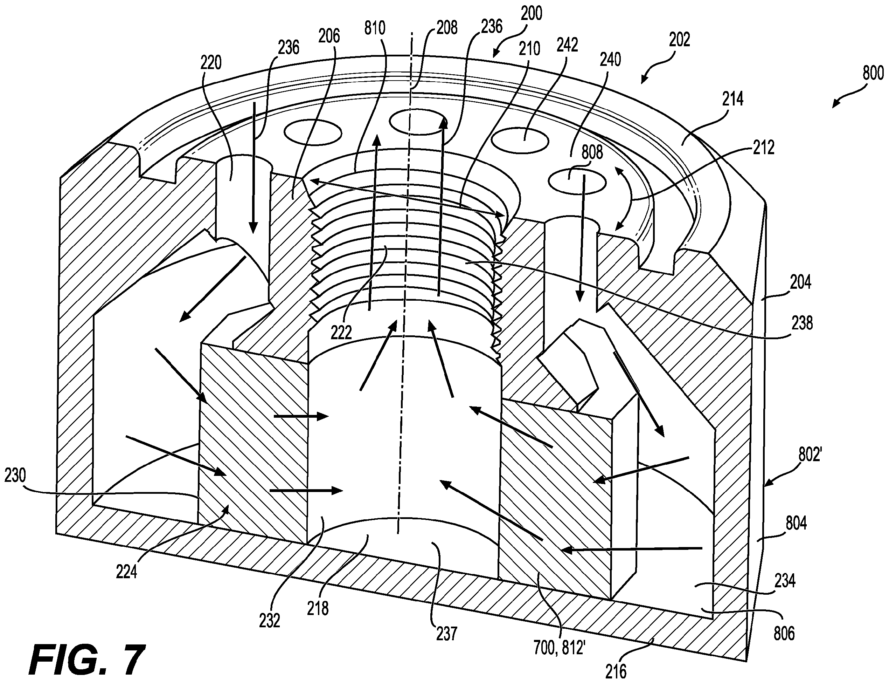

Looking at FIGS. 1 thru 5, the filter medium 700 may include a rectangular cubic configuration. In other embodiments shown as those shown in FIGS. 7 thru 9, the filter medium 700' may include a cylindrical annular configuration. Other configurations are possible.

Focusing on FIG. 1, the first portion 704 defines a first dimension 714 (e.g. a width) and the second portion 710 may define a second dimension 716 (e.g. another width) that has a different value than the first dimension 714. Other dimensions of the first portion 704 and the second portion 710 may have values differing from each other. A representative height 724 of a layer of the first portion 704 may be approximately 0.07 mm but other values are possible.

The first portion 704 may define a first undulating portion 718 and the second portion 710 may define a second undulating portion 720 at least partially contacting the first undulating portion 718. In some instances, most or all of the undulating portions 718, 720 contact each other. Other degrees of contact are possible.

As best seen in FIG. 2, the second material 712 may at least partially be removed, creating voids 722. In some cases, a small residue of the second material 712 may remain but not necessarily so.

It should be noted that any of the embodiments of a filter or filter medium discussed herein may use this method or structure just discussed with reference to filter medium 700 whether the second material or its removal is specifically mentioned or not. That is to say, a first undulating strip of material may be laid down using the first material and a second undulating strip of material may be laid down using the second material, etc.

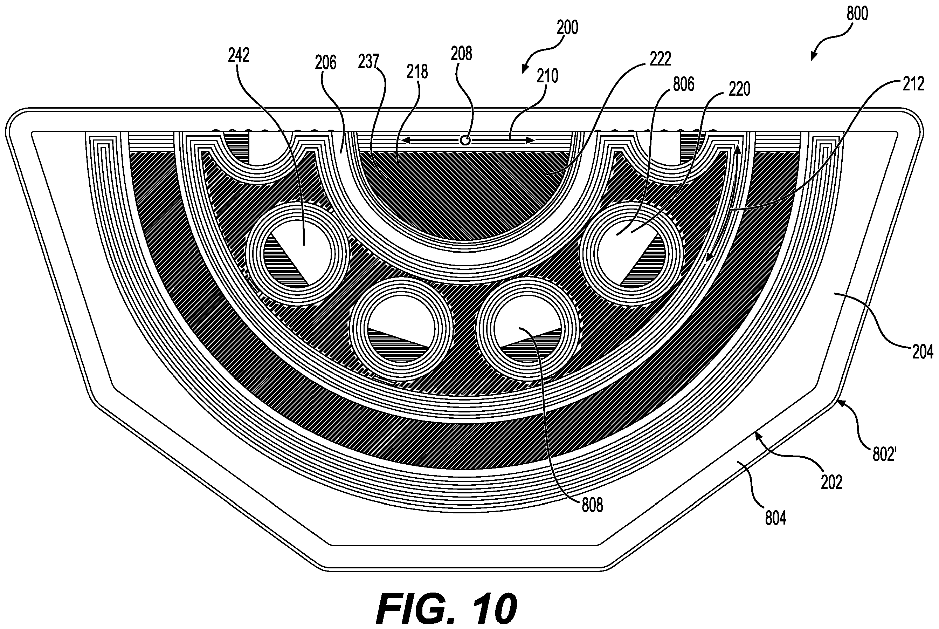

Referring now to FIGS. 1 thru 11, a filter 800 according to an embodiment of the present disclosure may comprise a body 802, 802' including an outer wall 804 defining a hollow interior 806, an inlet 808 in fluid communication with the hollow interior 806, an outlet 810 in fluid communication with the hollow interior 806, and a first filter medium 812, 812' disposed in the hollow interior 806. The first filter medium 812, 812' may include a first portion 704 comprising a first material 706 defining a plurality of spaces 708 lacking the first material 706, and a second portion 710 comprising a second material 712 disposed in the plurality of spaces 708 at least partially filling the spaces 708.

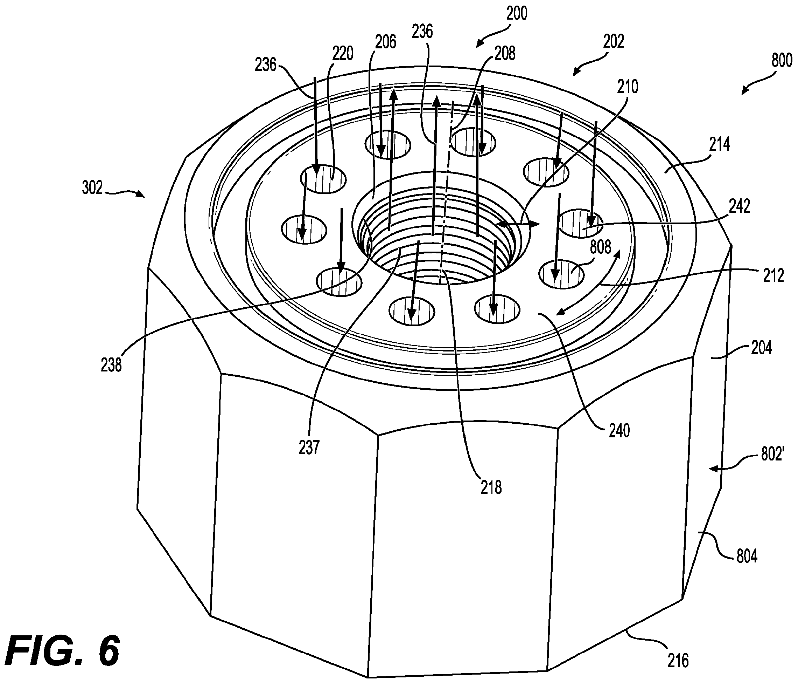

In FIGS. 1 thru 5, the body 802 and the filter medium 812' include rectangular cubic configurations while in FIGS. 6 thru 11, the body 802' and the filter medium 802' include cylindrical annular configurations. The second material 712 may be at least partially removed, creating voids 722.

Focusing on FIGS. 2 thru 5, a filter according to an embodiment of the present disclosure will be described. It should be noted that the top portion of the filter in FIGS. 1 thru 4 has been removed to show the inner workings of the filter. Even though the top portion is removed, it is to be understood that that the filter would include such a top portion and would form an enclosure in practice. Other components of the filter not specifically shown but is understood to be present include end caps, a center tube, a top plate, etc. The center tube may be omitted in some embodiments because the filter may have more structural integrity since the filter may be manufactured with the filter media.

The filter 100 may comprise a body 102 including an outer wall 104 defining a hollow interior 106. As shown, the outer wall 104 has a rectangular shape (or other polygonal shape). This may not be the case in other embodiments. Other configurations such as cylindrical are possible for the outer wall 104. Referring again to FIGS. 2 thru 5, an inlet 108 is in fluid communication with the hollow interior 106. Also, an outlet 110 is in fluid communication with the hollow interior 106. A first filter medium 112 is disposed in the hollow interior 106 comprising a plurality of layers such as those previously described herein. Undulating strips of solidified structural material, forming a plurality of pores after the undulating strips of dissolvable support material has at least been partially removed.

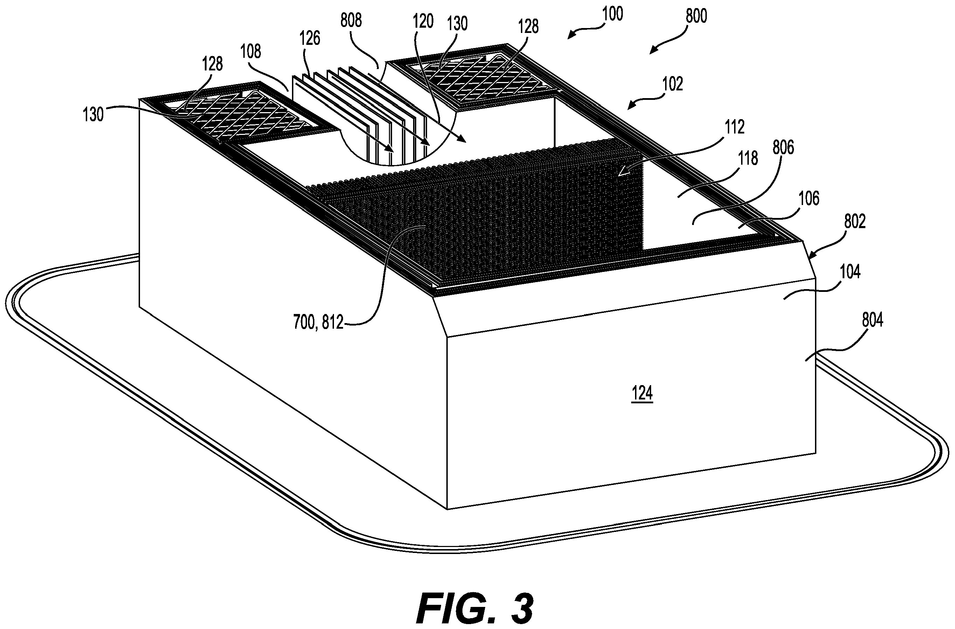

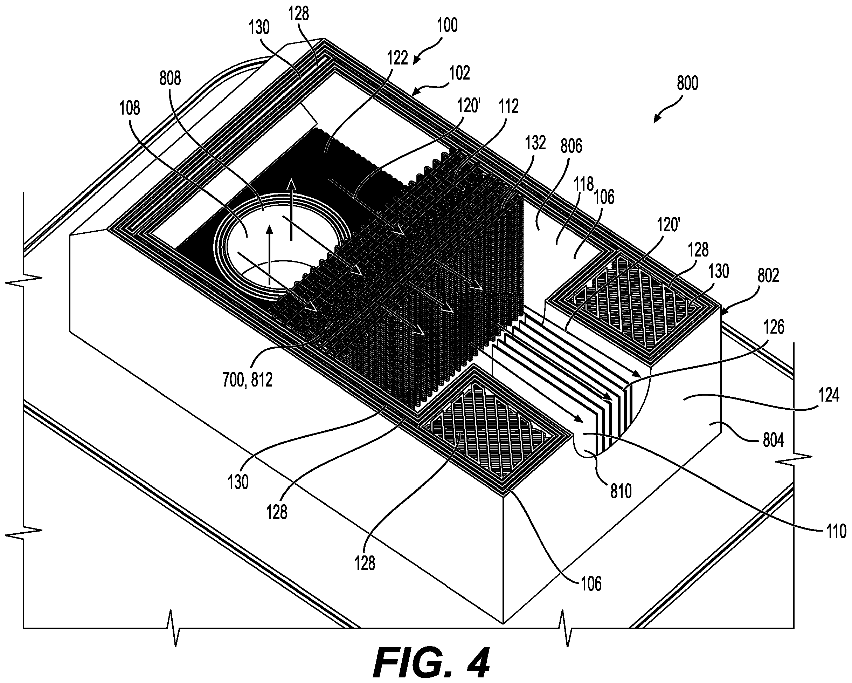

Looking at FIGS. 3 thru 5, the hollow interior 106 includes a rectangular cubic chamber 118 in fluid communication with the inlet 108 and the outlet 110. The first filter medium 112 is disposed in the rectangular cubic chamber 118 between the inlet 108 and the outlet 110. Consequently, fluid that is to be filtered enters through the inlet 108, passes through the first filter medium 112, and out the outlet 110. It should be noted that the inlet 108 and outlet 110 can be switched as illustrated by the contrasting fluid flow arrows 120 in FIG. 3 versus the fluid flow arrows 120' in FIG. 4. The hollow interior 106 may have other shapes other than rectangular cubic.

Referring to FIG. 4, the body 102 may include a bottom wall 122 and a sidewall 124. The inlet 108 may extend through the bottom wall 122 and the outlet 110 may extend through the sidewall 124. In FIGS. 1, 2 and 4, the body 102 defines a plurality of parallel support ribs 126 disposed in the outlet 110 or inlet 108 that extends through the sidewall 124. The function of these support ribs 126 is to support the structure of the body 102 as it is being built via an additive manufacturing process, while being able to allow fluid flow through the orifice (e.g. inlet 108 or outlet 110) in the sidewall 124 with little resistance. That is to say, the ribs 126 are oriented in the desired flow direction 120, 120'.

Similarly, the body 102 further defines a plurality of auxiliary voids 128 that are not in fluid communication with the rectangular cubic chamber 118. The body 102 includes support structure 130 disposed in the plurality of auxiliary voids 128. The purpose of the auxiliary voids 128 is to speed up the manufacturing process when being built via an additive manufacturing process while the support structure 130, which may take the form of a lattice of interconnecting ribs, provides for structural rigidity and strength.

The body 102 may be seamless and the first filter medium 112 may be an integral part of the body 102 or may be a separate component from the body 102, being inserted later into the body 102. The first filter medium 112 may define a plurality of pores that define a minimum dimension 134 that is between 50 µm to 200 µm. In particular embodiments, the minimum dimension 134 of the plurality of pores may range from 70 µm to 170 µm. These various configurations, spatial relationships, and dimensions may be varied as needed or desired to be different than what has been specifically shown and described in other embodiments. For example, the pore size may be as big as desired or may be as small as desired (e.g. 4 microns).

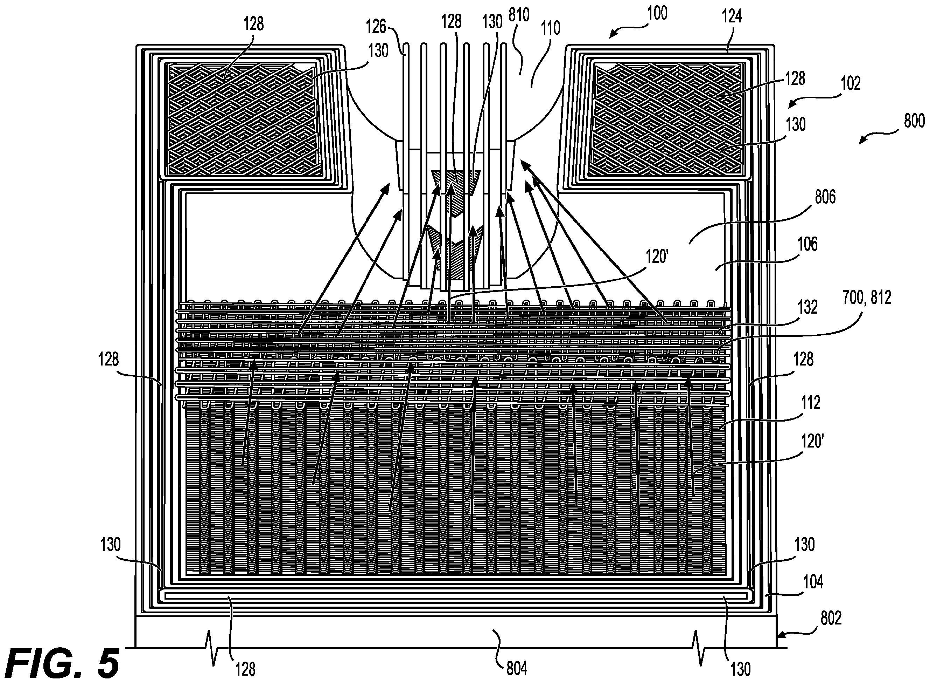

Looking at FIGS. 4 and 5, the filter 100 may further comprise a second filter medium 132 disposed immediately adjacent the first filter medium 112 and the outlet 110. That is to say, the fluid to be filtered flows through the inlet 108, through the first filter medium 112, then through the second filter medium 132, and then out through the outlet 110. In some embodiments, the first filter medium 112 defines a plurality of pores having a first minimum dimension and the second filter medium 132 defines a plurality of pores having a second minimum dimension. The first minimum dimension may be greater than the second minimum dimension.

As a result, a plurality of filtering stages may be provided, so that larger sized contaminants are filtered out in the first stage by the first filter medium 112, finer contaminants are filtered out in the second stage by the second filter medium 132, etc. As many filtering states as needed or desired may be provided in various embodiments (up to and including the n^{th} stage). In other embodiments, the first filter medium 112 may be configured to remove water, the second filter medium 134 may be configured to remove debris, etc. In some embodiments, the first filter medium 112 and the second filter medium 132 are separate components that may be inserted into the body 102. In such a case, the body 102 of the filter 100 is separate from the first filter medium 112 and the second filter medium 132. In other embodiments, the first filter medium 112 and the second filter medium 132 are integral with the body 102 and each other, being built up at the same time as the body 102 via an additive manufacturing process.

Focusing now on FIGS. 6 thru 11, a filter 200 according to another embodiment of the present disclosure (e.g. a canister style filter) will be described. The filter 200 may comprise a housing 202 including an outer wall 204 and an inner wall 206. The outer wall 204 and the inner wall 206 define the same longitudinal axis 208. The inner wall 206 may have a cylindrical configuration and may define a radial direction 210 that passes through the longitudinal axis 208 and that is perpendicular thereto, and a circumferential direction 212 that is tangential to the radial direction 210 and perpendicular to the longitudinal axis 208. The inner wall 206 is spaced radially away from the outer wall 204, the housing 202 further defining a first end 214 and a second end 216 disposed along the longitudinal axis 208 and a hollow interior 218. These various configurations and spatial relationships may differ in other embodiments.

An inlet 220 is in fluid communication with the hollow interior 218 and an outlet 222 is in fluid communication with the hollow interior 218. A filter medium 224 is disposed in the hollow interior 218 comprising a plurality of layers, etc. Each layer may include an undulating strip, etc. of solidified material. The filter medium 224 includes an annular shape defining an outer annular region 230 and an inner annular region 232.

The hollow interior 218 includes an outer annular chamber 234 that is in fluid communication with the inlet 220 and the outer annular region 230 of the filter medium 224 and a central cylindrical void 237 concentric about the longitudinal axis 208 that is in fluid communication with the outlet 222 and the inner annular region 232 of the filter medium 224. This establishes the flow of the fluid to be filtered shown by arrows 236 in FIGS. 6 and 7. This direction of flow may be reversed in other embodiments.

The inner wall 206 may define the outlet 222 and may include internal threads 238 or other types of mating interfaces. The housing 202 defines a top surface 240 and the inlet 220 is a first cylindrical hole 242 extending from the top surface 240 to outer annular chamber 234 and the outlet 222 extends from the top surface 240 to the central cylindrical void 237. As shown in FIGS. 7 thru 9, a plurality of identically configured inlets 220 may be provided, arranged in a circular array about the longitudinal axis 208. Similarly, a plurality of outlets may be provided in various embodiments. The number and placement of the inlets and outlets may be varied as needed or desired in various embodiments.

In some embodiments, the housing 202 is seamless and the filter medium 224 is integral with the housing 202. For example, the filter medium 224 may be built at the same time as the housing 202 via an additive manufacturing process. In other embodiments, the filter medium 224 may be a separate component inserted into the housing. A plurality of different filter media may be provided in a concentric manner as described earlier herein to provide multi-staged filtering if desired. The filter medium 224 defines a plurality of pores (such as indicated by FIG. 2) that define a minimum dimension that is less than 200 µm. As previously mentioned herein, the size of the pores may be any suitable size.

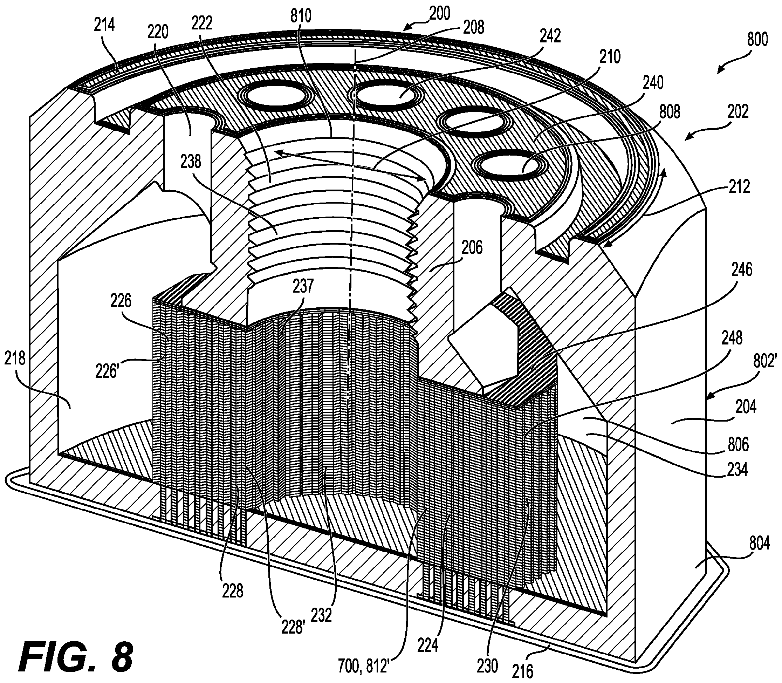

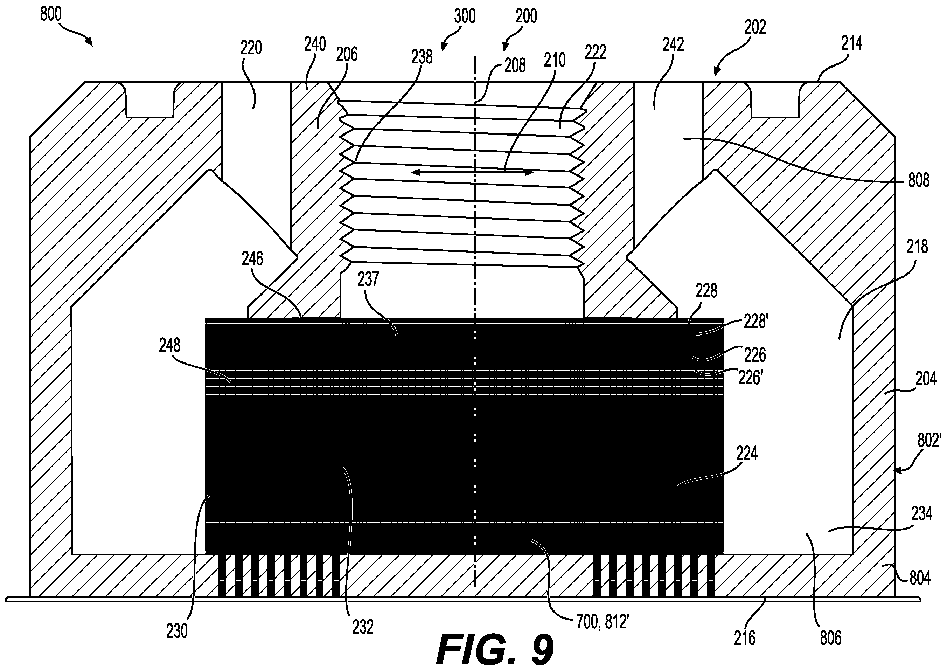

Focusing on FIGS. 8 and 9, the filter medium 224 comprises a cap portion and a bottom portion. The cap portion 246 including a first plurality of layers of solidified material including a first layer with a first undulating strip of solidified material extending in the first predetermined direction and a second layer with a second undulating strip of solidified material extending in a second predetermined direction. The first layer is in contact with the second layer and the first predetermined direction is not parallel with the second predetermined direction (as best seen with reference to FIGS. 1 and 2).

Similarly, the bottom portion 248 includes a second plurality of layers of solidified material including a third layer with a third undulating strip of solidified material extending in the third predetermined direction and a fourth layer with a fourth undulating strip of solidified material extending in a fourth predetermined direction. The third layer is in contact with the fourth layer and the third predetermined direction is not parallel with the fourth predetermined direction.

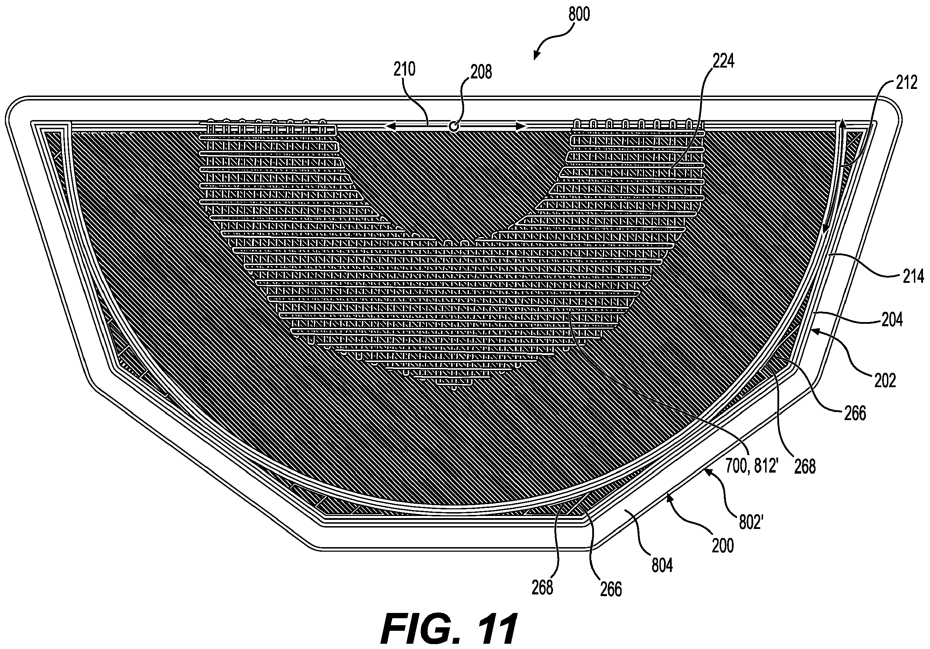

FIG. 11 shows that the filter 200 may include auxiliary voids 266 with support structure 268 disposed therein to speed up the manufacturing process when using an additive manufacturing process while maintaining the structural integrity of the filter 200.

It should also be noted that various embodiments of a filter medium as described herein may be reused by backflushing captured debris or other contaminants from the filter medium.

Any of the dimensions or configurations discussed herein for any embodiment of a filter medium or filter or associated features may be varied as needed or desired. Also, the filter medium or filter may be made from any suitable material that has the desired structural strength and that is chemically compatible with the fluid to be filtered. For example, various plastics may be used for the structural material including, but not limited to PLA, co-polyesters, ABS, PE, Nylon, PU, etc. Other plastics may be used for the support material including PVA, etc.

### Industrial Applicability

In practice, a filter medium, or a filter according to any embodiment described herein may be sold, bought, manufactured or otherwise obtained in an OEM (original equipment manufacturer) or after-market context.

The disclosed filter mediums and filters may be manufactured using conventional techniques such as, for example, casting or molding. Alternatively, the disclosed filter mediums and filters may be manufactured using other techniques generally referred to as additive manufacturing or additive fabrication.

Known additive manufacturing/fabrication processes include techniques such as, for example, 3D printing. 3D printing is a process wherein material may be deposited in successive layers under the control of a computer. The computer controls additive fabrication equipment to deposit the successive layers according to a three-dimensional model (*e.g.* a digital file such as an AMF or STL file) that is configured to be converted into a plurality of slices, for example substantially two-dimensional slices, that each define a cross-sectional layer of the filter or filter medium in order to manufacture, or fabricate, the filter or filter medium. In one case, the disclosed filter or filter medium would be an original component and the 3D printing process would be utilized to manufacture the filter or filter medium. In other cases, the 3D process could be used to replicate an existing filter or filter medium and the replicated filter or filter medium could be sold as aftermarket parts. These replicated aftermarket filters or filter mediums could be either exact copies of the original filter or filter mediums or pseudo copies differing in only non-critical aspects.

With reference to FIG. 112, the three-dimensional model 1001 used to represent a filter 100, 200, 800 or a filter medium 700 according to any embodiment disclosed herein may be on a computer-readable storage medium 1002 such as, for example, magnetic storage including floppy disk, hard disk, or magnetic tape; semiconductor storage such as solid state disk (SSD) or flash memory; optical disc storage; magneto-optical disc storage; or any other type of physical memory or non-transitory medium on which information or data readable by at least one processor may be stored. This storage medium may be used in connection with commercially available 3D printers 1006 to manufacture, or fabricate, the filter 100, 200, 800 or the filter medium 700. Alternatively, the three-dimensional model may be transmitted electronically to the 3D printer 1006 in a streaming fashion without being permanently stored at the location of the 3D printer 1006. In either case, the three-dimensional model constitutes a digital representation of the filter 100, 200, 800 or the filter medium 700 suitable for use in manufacturing the filter 100, 200, 800 or the filter medium 700.

The three-dimensional model may be formed in a number of known ways. In general, the three-dimensional model is created by inputting data 1003 representing the filter 100, 200, 800 or the filter medium 700 to a computer or a processor 1004 such as a cloud-based software operating system. The data may then be used as a three-dimensional model representing the physical the filter 100, 200, 800 or filter medium 700. The three-dimensional model is intended to be suitable for the purposes of manufacturing the filter 100, 200, 800 or filter medium 700. In an exemplary embodiment, the three-dimensional model is suitable for the purpose of manufacturing the filter 100, 200, 800 or filter medium 700 by an additive manufacturing technique.

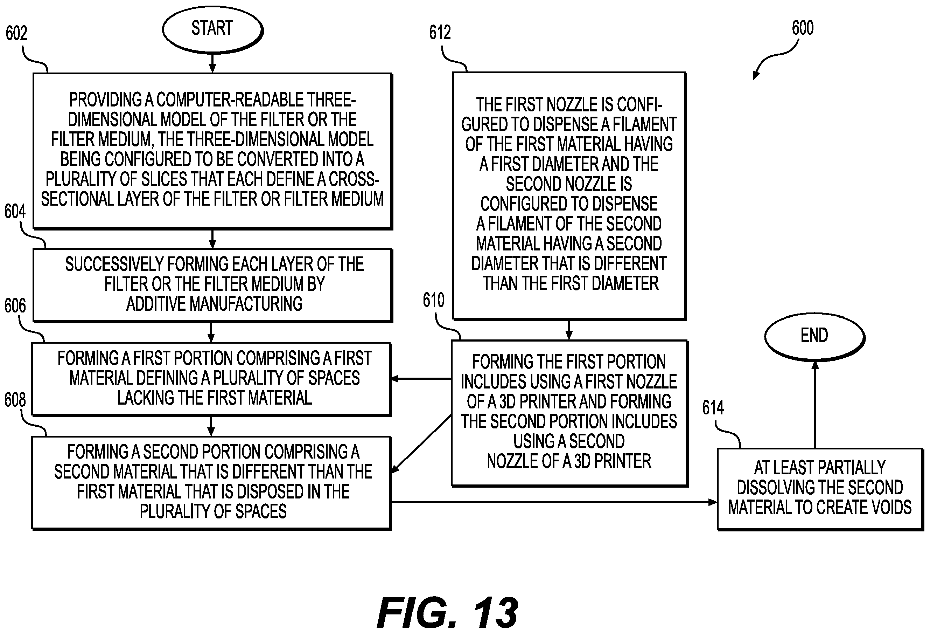

In one embodiment depicted in FIG. 13, the inputting of data may be achieved with a 3D scanner 1005. The method may involve contacting the filter 100, 200 or the filter medium 700 via a contacting and data receiving device and receiving data from the contacting in order to generate the three-dimensional model. For example, 3D scanner 1005 may be a contact-type scanner. The scanned data may be imported into a 3D modeling software program to prepare a digital data set. In one embodiment, the contacting may occur via direct physical contact using a coordinate measuring machine that measures the physical structure of the filter 100, 200, 800 or filter medium 700 by contacting a probe with the surfaces of the filter 100, 200, 800 or the filter medium 700 in order to generate a three-dimensional model.

In other embodiments, the 3D scanner 1005 may be a non-contact type scanner and the method may include directing projected energy (*e.g.* light or ultrasonic) onto the filter 100, 200, 800 or the filter medium 700 to be replicated and receiving the reflected energy. From this reflected energy, a computer would generate a computer-readable three-dimensional model for use in manufacturing the filter 100, 200, 800 or the filter medium 700. In various embodiments, multiple 2D images can be used to create a three-dimensional model. For example, 2D slices of a 3D object can be combined to create the three-dimensional model. In lieu of a 3D scanner, the inputting of data may be done using computer-aided design (CAD) software. In this case, the three-dimensional model may be formed by generating a virtual 3D model of the disclosed filter 100, 200, 800 or the filter medium 700 using the CAD software. A three-dimensional model would be generated from the CAD virtual 3D model in order to manufacture the filter 100, 200, 800 or the filter medium 700.

The additive manufacturing process utilized to create the disclosed the filter 100, 200, 800 or the filter medium 700 may involve materials such as described earlier herein. In some embodiments, additional processes may be performed to create a finished product. Such additional processes may include, for example, one or more of cleaning, hardening, heat treatment, material removal, and polishing such as when metal materials are employed. Other processes necessary to complete a finished product may be performed in addition to or in lieu of these identified processes.

Focusing on FIG. 13, the method 600 for manufacturing a filter or filter medium according to any embodiment disclosed herein may comprise providing a computer-readable three-dimensional model of the filter or the filter medium, the three-dimensional model being configured to be converted into a plurality of slices that each define a cross-sectional layer of the filter or filter medium (block 602), successively forming each layer of the filter or filter medium by additive manufacturing (block 604), forming a first portion comprising a first material defining a plurality of spaces lacking the first material (block 606), and forming a second portion comprising a second material that is different than the first material that is disposed in the plurality of spaces (block 608).

Forming the first portion may include using a first nozzle of a 3D printer and forming the second portion may include using a second nozzle of a 3D printer (block 610). More specifically, the first nozzle may be configured to dispense a filament of the first material having a first diameter and the second nozzle may be configured to dispense a filament of the second material having a second diameter that is different than the first diameter (block 612). This might not be the case in other embodiments.

Also, the method may comprise at least partially dissolving the second material to create voids (block 614).

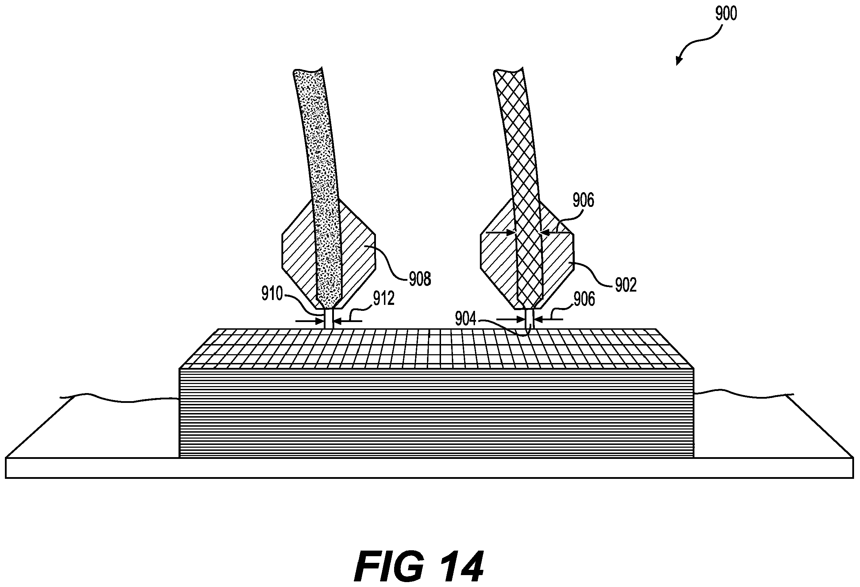

FIG. 14 illustrates an apparatus 900 such as a 3D printer that may be used to make a filter, a filter medium, or implement any of the embodiments described herein. The apparatus includes a first nozzle 902 dispensing a first filament 904 having a first diameter 906 (e.g. 0.2 mm) for the structural material and a second nozzle 908 dispensing a second filament 910 having a second diameter 912 (e.g. 0.3 mm) for the dissolvable support material.

It will be apparent to those skilled in the art that various modifications and variations can be made to the embodiments of the apparatus and methods of assembly as discussed herein without departing from the scope or spirit of the invention(s). Other embodiments of this disclosure will be apparent to those skilled in the art from consideration of the specification and practice of the various embodiments disclosed herein. For example, some of the equipment may be constructed and function differently than what has been described herein and certain steps of any method may be omitted, performed in an order that is different than what has been specifically mentioned or in some cases performed simultaneously or in sub-steps. Furthermore, variations or modifications to certain aspects or features of various embodiments may be made to create further embodiments and features and aspects of various embodiments may be added to or substituted for other features or aspects of other embodiments in order to provide still further embodiments.

Accordingly, it is intended that the specification and examples be considered as exemplary only, with a true scope and spirit of the invention(s) being indicated by the following claims and their equivalents.

## Claims

1. A filter medium (700) comprising:
a matrix (702) including:
a first portion (704) comprising a first material (706) defining a plurality of spaces (708) lacking the first material; and
a second portion (710) comprising a second material (712) disposed in the plurality of spaces (708) at least partially filling the spaces (708);
wherein the second material (712) has a water solubility equal to or less than 30 mass parts of water necessary to dissolve 1 mass part of the second material (712) and the first material (706) has a water solubility greater than 30 mass parts of water necessary to dissolve 1 mass part of the first material (706).

2. The filter medium (700) of claim 1, wherein the first material (706) comprises at least one of the following permanent structural materials: PLA, co-polyesters, ABS, PE, Nylon, PU; and the second material (712) includes a dissolvable support material comprising PVA.

3. The filter medium (700) of claim 1 wherein the first material has a different chemical structure than the second material.

4. The filter medium (700) of claim 1 wherein both the first material (706) and the second material (712) are plastic materials.

5. The filter medium (700) of claim 1 wherein the filter medium (700) includes a rectangular cubic configuration.

6. The filter medium (700) of claim 1 wherein the filter medium (700) includes a cylindrical annular configuration.

7. The filter medium (700) of claim 1 wherein the first portion (704) defines a first undulating portion (718) and the second portion (710) defines a second undulating portion (720) at least partially contacting the first undulating portion (718).

8. The filter medium (700) of claim 1 wherein the second material (712) is at least partially removed, creating voids (722).

9. A filter (800) comprising:
a body (802, 802') including an outer wall (804) defining a hollow interior;
an inlet (808) in fluid communication with the hollow interior (806),
an outlet (810) in fluid communication with the hollow interior (806); and
a first filter medium (812, 812') disposed in the hollow interior (806) including:
a first portion (704) comprising a first material (706) defining a plurality of spaces (708) lacking the first material (706); and
a second portion (710) comprising a second material (712) disposed in the plurality of spaces (708) at least partially filling the spaces (708).

10. The filter (800) of claim 9 wherein the second material (712) is at least partially removed, creating voids (722).
